Europäisches Patentamt

European Patent Office

Office européen des brevets

(19)

(11) Veröffentlichungsnummer: **0 176 029**

**A1**

(12)   # EUROPÄISCHE PATENTANMELDUNG

(21) Anmeldenummer: **85111815.8**

(51) Int. Cl.⁴: **H 04 B 7/005**

(22) Anmeldetag: **18.09.85**

(30) Priorität: **19.09.84 DE 3434404**

(43) Veröffentlichungstag der Anmeldung:
**02.04.86 Patentblatt 86/14**

(84) Benannte Vertragsstaaten:
**AT BE CH DE FR GB IT LI NL SE**

(71) Anmelder: **Siemens Aktiengesellschaft
Berlin und München Wittelsbacherplatz 2
D-8000 München 2(DE)**

(72) Erfinder: **Vogel, Klaus, Dipl.-Ing.
Kranzlstrasse 15
D-8192 Gelting(DE)**

(54) **Digitales Übertragungssystem mit adaptiver Funkfeldentzerrung.**

(57) Die Erfindung bezieht sich auf ein digitales Übertragungssystem mit adaptiver Funkfeldentzerrung. Hierbei sollen die funkfeldbedingten Laufzeit- und Amplitudenverzerrungen in einfacher Weise in der ZF-Ebene entzerrt werden.

Die Erfindung sieht hierzu vor, daß auf der Sendeseite eine Pilot-Einfüge-Einrichtung (12) eingeschaltet ist, in der Pilot-frequenzen dem mit Pilotlücken versehenen Digitalspektrum zuaddiert werden. Auf der Empfangsseite mit einem Grund-und eventuell einem Diversityempfänger (10) ist in die Zwischen-frequenzleitung zwischen Empfänger und einem Demodulator ein adaptiver ZF-Entzerrer (13) eingeschaltet. In diesem wird das empfangene ZF-Signal hinsichtlich frequenzabhängiger Gruppenlaufzeit/Phasen- und Amplitudenverzerrungen des Funkfeldes an den von Pilotfrequenzen gestützten Stellen des Spektrums durch diesen Frequenzen zugeordnete Amplituden- und Laufzeit/Phasenstellglieder entzerrt.

EP 0 176 029 A1

./...

FIG 1

Siemens Aktiengesellschaft
Berlin und München

Unser Zeichen 0176029
VPA 84 P 1 7 1 8 E

Digitales Übertragungssystem mit adaptiver Funkfeldentzerrung

Die Erfindung bezieht sich auf ein digitales Übertragungssystem mit Einrichtungen zur adaptiven Amplituden- und Laufzeitentzerrung schwundbehafteter Funkfelder.

Mit höherstufigen Modulationsverfahren, beispielsweise dem 16 QAM-Verfahren, läßt sich die Übertragungskapazität des einzelnen Funkgerätes wesentlich steigern. Dies setzt jedoch eine verbesserte Technik zur adaptiven Funkfeldentzerrung voraus.

Der Erfindung liegt die Aufgabe zugrunde, für ein Übertragungssystem der einleitend beschriebenen Art eine Lösung anzugeben, die funkfeldbedingten Laufzeit- und Amplitudenverzerrungen in einfacher Weise in der ZF-Ebene zu entzerren. Der Entzerrer soll dabei unabhängig vom Modulationsverfahren und seiner Stufigkeit sein, für bereits vorhandene Systeme verwendbar und so aufgebaut sein, daß das Ein- und Ausrasten unterhalb der thermischen Systemschwelle des Digitalsystems liegen.

Diese Aufgabe wird gemäß der Erfindung in der Weise gelöst, daß auf der Sendeseite des Übertragungssystems zwischen einem Modulator zur Erzeugung des ZF-Signals und der Sendeeinrichtung eine Pilot-Einfüge-Einrichtung eingeschaltet ist, in der Pilotfrequenzen dem mit Pilotlücken versehenen Digitalspektrum zuaddiert werden, und daß auf der mit einem Grund- und einem Diversityempfänger ausgestatteten Empfangsseite [*)] zwischen dem Empfänger und einem Demodulator ein adaptiver Entzerrer eingeschaltet ist, in dem das empfangene ZF-Signal hinsichtlich frequenzabhängiger Gruppenlaufzeit/Phasen- und Amplitudenver-
*)in die Zwischenfrequenzleitung

31. Aug. 1984 / Klu 1 Kdg

zerrungen des Funkfeldes an den von Pilotfrequenzen gestützten Stellen des Spektrums durch diesen Frequenzen
zugeordnete Amplituden- und Laufzeit/Phasenstellglieder
entzerrt wird.

Vorteilhafte Ausgestaltungen und Weiterbildungen des
Erfindungsgegenstandes sind in den Unteransprüchen angegeben.

Nachstehend wird die Erfindung anhand eines in der Zeichnung dargestellten Ausführungsbeispiels näher erläutert.

Es zeigen
Figur 1 ein digitales Übertragungssystem im Blockschaltbild,
Figur 2 in einer grafischen Darstellung ein mit Pilotlükken versehenes Digitalspektrum und in diese eingesetzten Pilotfrequenzen,
Figur 3 in einer grafischen Darstellung das Spektrum der
        Pilotfrequenzen und
Figur 4 und 5 in einer Detaildarstellung zwei Baugruppen
        zur Pilotregenerierung im empfangsseitigen
        Entzerrer.

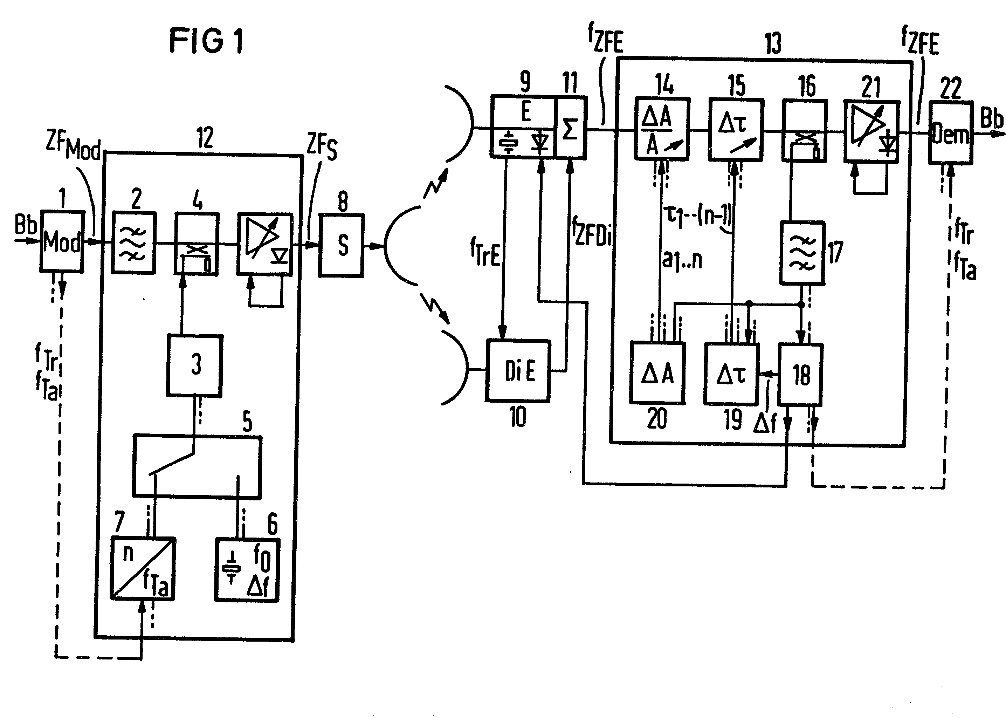

Figur 1 zeigt die Sende- und Empfangseinrichtungen des
Übertragungssystems. Auf der Sendeseite wird das Basisband
Bb einem Modulator 1 zugeführt. Zwischen dem Modulator 1,
dessen Ausgang das modulierte Signal in der ZF-Ebene entnehmbar ist, und einem mit einer Sendeantenne verbundenen
Sender 8 ist eine Pilot-Einfüge-Einrichtung 12 eingeschaltet. In der Pilot-Einfüge-Einrichtung 12, die im Längszweig ein Pilotfilter 2 und eine Koppeleinrichtung 4 sowie im Querzweig einen an die Koppeleinrichtung 4 angeschlossenen Pilotmodulator 3 enthält, werden dem digitalen
Spektrum mit Hilfe des Filters 2, vorzugsweise bestehend
aus einer Oberflächenwellenfilteranordnung oder Quarzfilteranordnung, über das Band verteilte schmale Spektral-

anteile entnommen. Die Spektralanteile der Breite $\Delta f_x$ und der Tiefe a [dB] können z.B. in regelmäßigen Abständen $\Delta f$ angeordnet sein. Diese Störung wirkt so, als würde dem Signal kompensierend ein Signal der Breite $\Delta f_x$ und der Frequenz $f_p$ zugesetzt. Die Zahl und Breite der Lücken ist so gewählt, daß eine vorgewählte Systemdegradation, z.B. 1..2dB 16 QAM, nicht überschritten wird. In die Lücken im digitalen Spektrum werden Pilote $f_p$ eingesetzt, die in ihrer Größe ebenfalls auf die gewählte Systemdegradation abgestimmt sind. Die Lage der Pilote zueinander ist vorzugsweise symmetrisch zum ZF-Träger mit konstanten Pilotabständen $\Delta f$. Wählt man $\Delta f$ als Bruchteil n der Taktfrequenz unterhalb der Frequenz $f_0$ und als Bruchteil m des Trägers oberhalb der Frequenz $f_0$, so kann durch Mischen jeweils zweier Pilottöne im Empfänger und entsprechende Vervielfachung der Takt und/oder der Träger auch an der $10^{-3}$-Systemschwelle mit beispielsweise 30dB Störabstand gewonnen und zum Nachregeln eines Takt- und/oder Träger-oszillators verwendet werden. Über die nachgeregelten Takt- und/oder Träger-Oszillatoren kann ein schwundbedingtes Ausrasten der Träger- und Taktschleifen im Systemmodulator auf der Empfangsseite verhindert werden.

Die Erzeugung des Pilotrasters in der Pilot-Einfüge-Einrichtung 12 erfolgt im Pilotmodulator 3 durch z.B. Phasen- oder Frequenzmodulation einer Frequenz $f_0$ mit einer Fre-quenz $\Delta f$. Diese Frequenzen können in der Baugruppe 6 der Pilot-Einfüge-Einrichtung 12 erzeugt werden oder z.B. über einen Wählschalter 5 und eine Frequenzteiler- und Aufbereitungsbaugruppe 7 aus den Träger- und Taktfrequenzen des Modulators 1 abgeleitet werden (strichlierte Mehrfachverbindung vom Modulator 1 zur Baugruppe 7 in der Pilot-Einfüge-Einrichtung 12). Die aufbereiteten Pilot-frequenzen werden über den Koppler 4 dem mit Pilotlücken versehenen Digitalspektrum am Ausgang des Pilotfilters 2 zuaddiert. In den Übertragungsweg ist z.B. ferner ein pegelgeregelter ZF-Verstärker eingeschaltet, der den erforderlichen ZF-Eingangspegel für den Digitalsender 8 erzeugt.

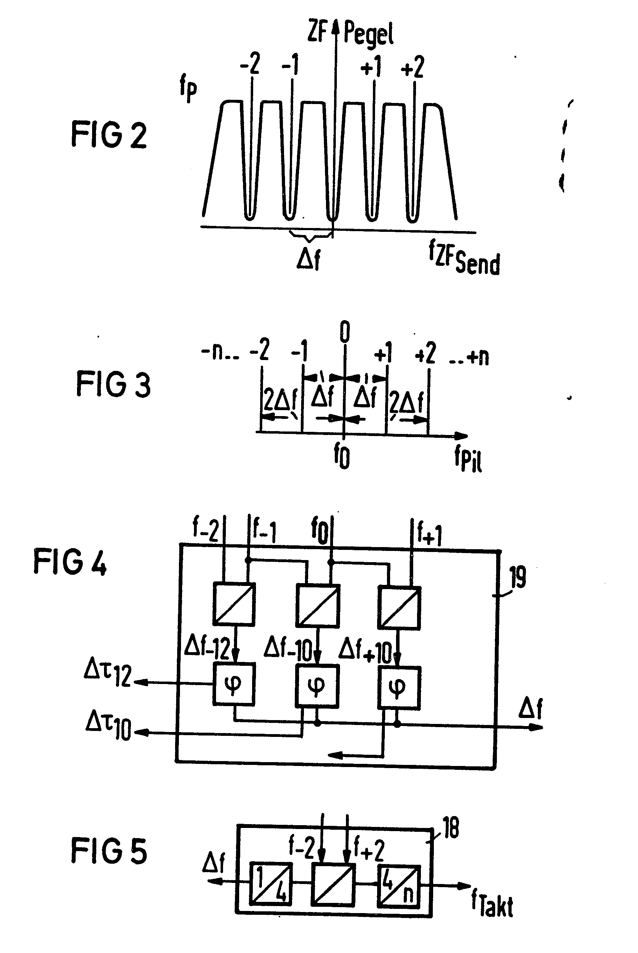

Das Digitalspektrum mit Pilotlücken und in diese Lücken eingefügten Pilotfrequenzen ist in Figur 2 dargestellt. Dabei ist der ZF-Pegel über der Sende-ZF-Frequenz aufgetragen. Die einzelnen Pilotfrequenzen $f_p$=-2, -1, 0, +1, +2 sind z.B. in symmetrisch zur Frequenz $f_0$ angeordnete Lücken eingefügt. Figur 3 zeigt das zugehörige Pilotspektrum. Hierbei ist angenommen, daß $f_0$ gleich der ZF-Trägerfrequenz ist, also $f_0=f_{Tr}$. Hierbei gelten z.B. ferner die Beziehungen

$$\Delta f = \frac{f_{takt}}{n} \quad \text{oder} \quad \frac{f_{Träger}}{m}.$$

Auf der Empfangsseite sind ein Grundempfänger 9 und ein Diversityempfänger 10 vorgesehen, die hinsichtlich der Trägerfrequenz $f_{Tr}$ miteinander synchronisiert sind. In einem Empfangsteil 11 werden die Signale des Grundempfängers 9 und des Diversityempfängers 10 zusammengeführt. Vom Empfänger gelangt das geregelte Empfangs-ZF-Signal über einen adaptiven Entzerrer 13 an einen Demodulator 22, dem das Basisbandsignal Bb entnehmbar ist. Der Entzerrer 13 enthält in seinem Längszweig Amplitudenstellglieder 14 und Laufzeit/Phasenstellglieder 15 sowie eine Koppelvorrichtung 16, der ein ZF-Regelverstärker 21 nachgeschaltet ist, mit dem durch die Stellglieder 14,15 bedingte Schwankungen des ZF-Mittelwertpegels ausgeglichen werden für die notwendige Konstanz des Demodulatoreingangspegels. Im Querzweig des Entzerrers 13 sind eine an die Koppelvorrichtung 16 angeschlossene Pilotfilterbank 17, eine Baugruppe 18 zur Pilotregeneration sowie eine Laufzeit-Pilotanordnung 19 und ein Pilotamplitudendetektor 20 angeordnet, deren Ausgangssignale als Stellgrößen den Amplituden- und Laufzeit/Phasenstellgliedern 14, 15 zugeführt werden. Die erfindungsgemäße Anordnung wirkt dabei so, daß die frequenzabhängigen Gruppenlaufzeit/Phasen- und Amplitudenverzerrungen des Funkfeldes (non-minimum und minimum-Phase Schwundereignisse) an den von Pilotfrequenzen gestützten Stellen des Spektrums durch die diesen Frequenzen zugeordneten Amplituden- und Laufzeit/Phasenstellglieder entsprechend einer Proportionalregelung entzerrt werden. Zwischen den Pilotfrequenzen werden die Spektrumsverzerrungen interpolierend kompensiert.

Die Stellgrößen werden dabei aus den regenerierten Pilottönen gewonnen. Amplitudenänderungen der Pilote, beispielsweise im Vergleich zu einem Langzeitmittelwert, sind Funkfeldschwankungen zuzuordnen. Sie werden in den Pilotdetektoren 20 registriert und führen über Stellgrößen $a_{1..n}$ zur breitbandigen Amplitudenentzerrung des ZF-Spektrums.

In der der Baugruppe 18 zur Pilotregeneration nachgeschalteten Laufzeit-Pilotauswertung 19, wovon in Figur 5 ein mögliches Ausführungsbeispiel zur Funktionsbeschreibung im Detail dargestellt ist, werden z.B. durch Mischung jeweils benachbarter Pilottöne ($f_{-2}$ und $f_{-1}$, $f_{-1}$ und $f_0$, $f_0$ und $f_{+1}$ ..) die Frequenzabstände $\Delta f$ regeneriert und gegen einen im Pilotregenerator 19 erzeugten Langzeitmittelwert von $\Delta f$ verglichen. Änderungen gegen diesen Wert sind auf funkfeldbedingte Schwankungen der frequenzabhängigen Gruppenlaufzeit zurückzuführen. Sie werden über die Stellgrößen $\Delta \tau_{1..(n-1)}$, die (n-1)-Pilotstützpunktfrequenzen zugeordnet sind, und die den entsprechenden Stützpunktfrequenzen zugeordneten Laufzeitstellgliedern in 15 ausgeregelt, so, daß die funkfeldbedingte Gruppenlaufzeit im Nutzfrequenzbereich entzerrt ist.

In der zwischen Pilotfilterbank 17 und Laufzeitpilotauswertung 19 eingeschalteten Baugruppe Pilotregeneration 18, die in Fig. 4 als Beispiel zur Funktionsbeschreibung im Detail dargestellt ist, können aus $\Delta f$-Werten Träger und/oder Takt regeneriert und dem Demodulator 22 zugeleitet

⓪176029
VPA 84 P 1718 E

werden (strichlierter Linienzug in Fig. 1). Ein Ausfall der Demodulatorschleifen Takt und/oder Träger kann dadurch bis über die thermische Systemschwelle $10^{-3}$ hinaus vermieden werden. Mit einer modulatorseitigen Trägereinspeisung für den Piloten $f_0$ und der Trägerrückgewinnung aus $\Delta f$ kann auch ein Regelkriterium für die Nachstellung des Empfängerträgers in den Empfängern 9, 10 gewonnen werden, so,daß bereits der Empfänger ein ZF-Signal mit phasenstarr synchronisiertem Träger abgibt bis weit über die thermische Systemschwelle hinaus. Dieser Vorgang ist zeichnerisch dargestellt durch die Verbindung zwischen der Baugruppe 18 und dem Empfänger 9.

Mit den erfindungsgemäßen Maßnahmen ist auch eine Pilotaddition und Spektralunterdrückung im Pilotfrequenzbereich im digitalen Basisband der Sendeseite möglich, setzt jedoch eine lineare Modulation im ZF-Bereich voraus.

11 Patentansprüche
5 Figuren

Patentansprüche

1. Digitales Übertragungssystem mit Einrichtungen zur adaptiven Amplituden- und Laufzeitentzerrung schwundbehafteter Funkfelder,
d a d u r c h   g e k e n n z e i c h n e t ,
daß auf der Sendeseite das Übertragungssystem zwischen einem Modulator (1) zur Erzeugung des ZF-Signals und der Sendeeinrichtung (8) eine Pilot-Einfüge-Einrichtung (12) eingeschaltet ist, in der Pilotfrequenzen dem mit Pilotlücken versehenen Digitalspektrum zuaddiert werden, und daß auf der mit einem Grund- und eventuell mit einem Diversityempfänger (9,10) ausgestatteten Empfangsseite in die Zwischenfrequenzleitung zwischen dem Empfänger und einem Demodulator (22) ein adaptiver ZF-Entzerrer (13) eingeschaltet ist, in dem das empfangene ZF-Signal hinsichtlich frequenzabhängiger Gruppenlaufzeit/Phasen- und Amplitudenverzerrungen des Funkfeldes an den von Pilotfrequenzen gestützten Stellen des Spektrums durch diesen Frequenzen zugeordnete Amplituden- und Laufzeit/Phasenstellglieder (14,15) entzerrt wird.

2. Übertragungssystem nach Anspruch 1,
d a d u r c h   g e k e n n z e i c h n e t ,
daß Spektralanteile der Breite $\Delta f$ in festgelegten Abständen über das Spektrum verteilt mit Filtern (2) entnommen werden.

3. Übertragungssystem nach Anspruch 1 oder 2,
d a d u r c h   g e k e n n z e i c h n e t ,
daß die Zahl und Breite der Lücken so gewählt sind, daß eine vorgewählte Systemdegradation nicht überschritten wird.

0176029

4. Übertragungssystem nach einem der Ansprüche 1 bis 3,
d a d u r c h   g e k e n n z e i c h n e t ,
daß in die Lücken eingesetzte Pilote hinsichtlich ihrer
Größe auf die gewählte Systemdegradation abgestimmt sind.

5. Übertragungssystem nach einem der Ansprüche 1 bis 4,
d a d u r c h   g e k e n n z e i c h n e t ,
daß der Abstand $\Delta f$ der zuaddierten Pilottöne unterhalb der
Frequenz $f_0$ z.B. als Bruchteil in der Taktfrequenz gewählt
wird und als Bruchteil m des Trägers z.B. oberhalb der
ZF-Frequenz $f_0$ gewählt wird.

6. Übertragungssystem nach einem der Ansprüche 1 bis 5,
d a d u r c h   g e k e n n z e i c h n e t ,
daß das Pilotraster in einem Modulator (3) der Pilot-Einfüge- Einrichtung (12) durch Phasen- oder Frequenzmodulation der ZF-Frequenz $f_0$ mit einer Frequenz $\Delta f$ erzeugt
wird.

7. Übertragungssystem nach Anspruch 6,
d a d u r c h   g e k e n n z e i c h n e t ,
daß die Frequenzen $f_0$ und $\Delta f$ in der Pilot-Einfüge-Einrichtung (12) erzeugt werden.

8. Übertragungssystem nach Anspruch 6,
d a d u r c h   g e k e n n z e i c h n e t ,
daß die Frequenzen $f_0$ und $\Delta f$ aus den Träger- und Taktfrequenzen des Modulators (1) des Senders abgeleitet und
über eine Frequenzteiler- und Aufbereitungseinrichtung (7)
und gegebenenfalls einen Umschalter (5) dem Modulator (3)
in der Pilot-Einfüge-Einrichtung (12) zugeführt werden.

9. Übertragungssystem nach einem der vorhergehenden Ansprüche,
d a d u r c h   g e k e n n z e i c h n e t ,
daß im adaptiven Entzerrer (13) auf der Empfangsseite im
Längszweig die Amplitudenstellglieder (14) und Laufzeit/

0176029

Phasenstellglieder (15) und diesen nachgeschaltet ein Koppelglied (16) angeordnet sind, über das ein Teil des ZF-Signals ausgekoppelt und einer Regelschleife zugeführt wird, bestehend aus einer Pilotfilterbank (17), einer Baugruppe (18) zur Pilotregeneration sowie einer Pilotauswertung für Laufzeit (19) und Pilotdetektor (20) für die Amplitude, in denen aus den regenerierten Pilottönen Stellgrößen für die Einstellung der Amplituden- und Laufzeit/ Phasenstellglieder (14,15) gebildet werden.

10. Übertragungssystem nach Anspruch 9,
d a d u r c h   g e k e n n z e i c h n e t ,
daß im Pilotregenerator (19) durch Mischung jeweils benachbarter Pilottöne die Frequenzabstände $\Delta$ f regeneriert und gegen einen im Pilotregenerator (19) erzeugten Langzeitmittelwert von $\Delta$ f verglichen und aus den sich ergebenden Änderungen Stellgrößen für die Laufzeitstellglieder (15) gebildet werden.

11. Übertragungssystem nach Anspruch 9,
d a d u r c h   g e k e n n z e i c h n e t ,
daß im Pilotdetektor (20) Amplitudenänderungen der Pilote im Vergleich zu einem Langzeitmittelwert ermittelt und daraus Stellgrößen für die Amplitudenstellglieder (14) abgeleitet werden.

FIG 1

FIG 2

ZF Pegel

$f_p$  −2  −1  +1  +2

$\Delta f$  $f_{ZF_{Send}}$

FIG 3

−n.. −2  −1  0  +1  +2 ..+n

$2\Delta f$  $\Delta f$  $\Delta f$  $2\Delta f$

$f_0$  $f_{Pil}$

FIG 4

$f_{-2}$  $f_{-1}$  $f_0$  $f_{+1}$  19

$\Delta f_{-12}$  $\Delta f_{-10}$  $\Delta f_{+10}$

$\Delta \tau_{12}$  $\varphi$  $\varphi$  $\varphi$

$\Delta \tau_{10}$  $\Delta f$

FIG 5

$f_{-2}$  $f_{+2}$  18

$\Delta f$  $\frac{1}{4}$  $\frac{4}{n}$  $f_{Takt}$

**0176029**

Europäisches
Patentamt

**EUROPÄISCHER RECHERCHENBERICHT**

Nummer der Anmeldung

EP 85 11 1815

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | INTERNATIONAL CONFERENCE ON COMMUNICATIONS, Band 2, Mai 1984, Seiten 642-645, Elsevier Science Publishers, Amsterdam, NL; S. TAKENAKA et al.: "A new 4 GHz 90 MBPS digital radio system using 64-QAM modulation" * Seite 642, linke Spalte, Zeile 30 - rechte Spalte, Zeile 24; Seite 643, linke Spalte, Zeilen 15-40 * | 1 | H 04 B 7/005 |
| Y | US-A-2 065 826 (ROOSENSTEIN u.a.) * Seite 1, linke Spalte, Zeilen 31-35; Seite 1, rechte Spalte, Zeilen 23-26; Seite 1, Zeile 29 - Seite 2, linke Spalte, Zeile 40 * | 1 | |
| A | | 2 | **RECHERCHIERTE SACHGEBIETE (Int Cl 4)**<br><br>H 04 B<br>H 04 L |
| Y | US-A-3 271 679 (FOSTOFF) * Spalte 2, Zeilen 38-51,61-64; Spalte 3, Zeilen 2-11 * | 1 | |
| A | PATENTS ABSTRACTS OF JAPAN, Band 3, Nr. 129, 26. Oktober 1979, Seite 153 E 147; & JP - A - 54 107 612 (NIPPON DENSHIN DENWA KOSHA) 23-08-1979 * Insgesamt * | 1,8 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 20-12-1985 | HOLPER G.E.E. |

| Europäisches Patentamt | EUROPÄISCHER RECHERCHENBERICHT | | |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 100 495 (WESTERN ELECTRIC) <br> * Seite 6, Zeile 6 - Seite 7, Zeile 4; Seite 13, Zeile 3 - Seite 14, Zeile 28; Seite 19, Zeile 32 - Seite 20, Zeile 25 * | 1,9 | |

-----

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 20-12-1985 | HOLPER G.E.E. |